# EUROPEAN PATENT APPLICATION

(11) **EP 1 718 071 A1**
(43) Date of publication of application: **02.11.2006**
(21) Application number: 05009466.3
(22) Date of filing: 29.04.2005
(51) Int. Cl.: H04N 5/76

(54) **Audio/Video processor for DVD player**

(71) Applicant: Eastech Electronics Inc., Taiwan (CN)
(72) Inventor: Hung, Cheng-Lin, Taoyuan Hsien Taiwan (CN)
(74) Representative: Viering, Jentschura & Partner

(57) **Abstract**

An audio-video process apparatus, which comprises an optic reading unit, an audio-video signal process module, a A/V amplifier module, a touch unit, and a display unit. Wherein the audio-video process module comprises a digital signal processor, which receives the control signal from the touch unit, and the inputting data from the optic reading unit, then outputs a processed audio-video signal to the A/V amplifier module. The A/V amplifier module then amplifies the processed audio-video signal and outputs it. Meanwhile the user can read the process status according to the display unit. The invention jointly processes the audio-video signal and control signal and then saves the manufacture cost according to the DSP audio-video signal process module.

## Description

### BACKGROUND OF THE INVENTION

### 1. Field of the invention

The invention is about an audio-video process apparatus of DVD receiver, and more particularly to an audio-video processing apparatus can be applied in various DVD receivers.

### 2. Description of the prior art

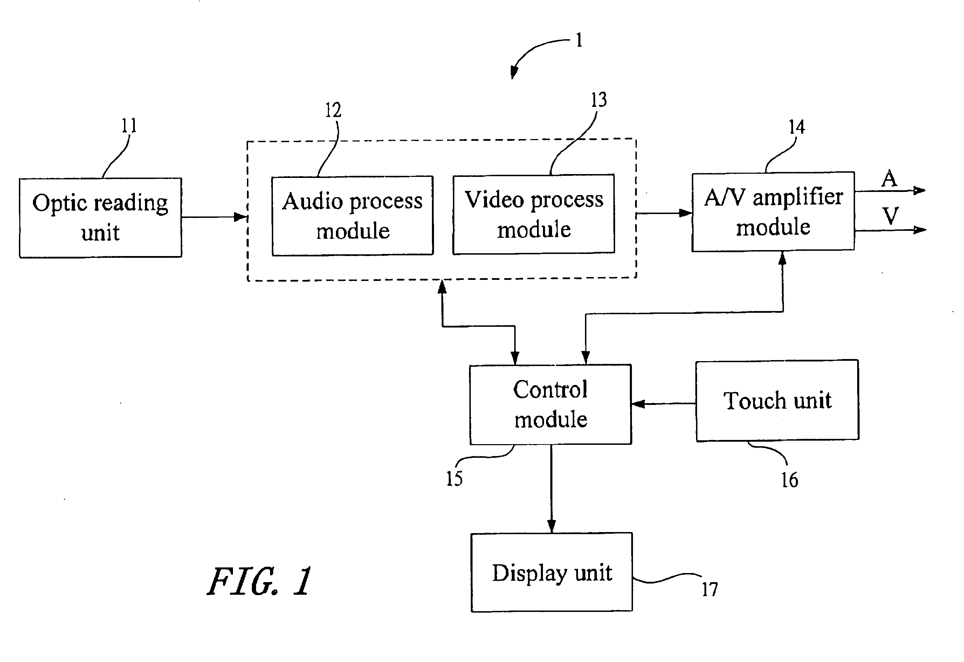

Referring to FIG. 1, as a circuitry block diagram of a prior audio-video process apparatus of DVD receiver, wherein the prior audio-video process apparatus 1 of DVD receiver comprises an optic reading unit 11, an audio process module 12, a video process module 13, a A/V amplifier module 14, a control module 15, a touch unit 16, and a display unit 17. A user inputs a control signal to the control module 15 via the touch unit 16, and the control module 15 drives the optic reading unit 11 to read the data into the audio process module 12 and the video process module 13, then the audio process module 12 and the video process module 13 separately process the data and then generate an audio-video signal to the A/V amplifier module 14 for generating an amplified signal, and the display unit 17 then displays processing status to the user, and co-functions with other apparatuses. But the prior audio-video process apparatus of DVD receiver needs three process modules of audio process, video process, and control, which costs much in product manufacture.

Thus it can be seen that the prior method still has disadvantages, and needs to be improved.

A novel audio-video process apparatus of DVD receiver is desired, and the present invention is designed to meet the need of above.

### SUMMARY OF THE INVENTION

One object of the invention is to provide an audio-video process apparatus of DVD receiver, which integrates the audio process module, video process module, and control module together by integrated circuit technology, then reduces manufacture cost.

Another object of the invention is to provide an audio-video process apparatus of DVD receiver, which is highly reliable, long-using-life, small in circuitry board size, and saving setting space.

The audio-video process apparatus of DVD receiver achieving above-mentioned objects comprises an optic reading unit, an audio-video signal process module, a A/V amplifier module, a touch unit, and a display unit. Wherein the audio-video process module comprises a digital signal processor(DSP), which receives the control signal from the touch init, and the inputting data from the optic reading unit, then outputs a processed audio-video signal to the A/V amplifier module. The A/V amplifier module then amplifies the processed audio-video signal and outputs it. Meanwhile the user can read the process status according to the display unit.

These features and advantages of the present invention will be fully understood and appreciated from the following detailed description of the accompanying Drawings.

### BRIEF DESCRIPTION OF THE DRAWINGS

FIG. 1 is a circuitry block diagram of prior audio-video process apparatus of DVD receiver; and
FIG. 2 is a circuitry block diagram of the invention.

### DETAILED DESCRIPTION OF THE PREFERRED EMBODIMENT

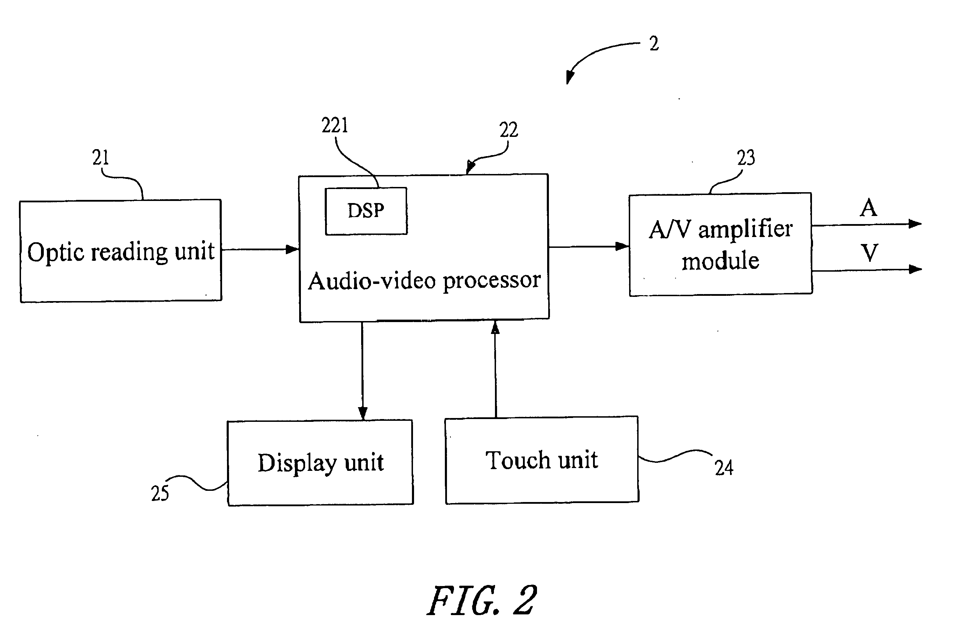

FIG. 2 is a circuitry block diagram of the invention, wherein the audio-video process apparatus of DVD receiver comprises:
an optic reading unit 21, which can read the data from a storage medium, and then output the data to an audio-video signal process module 22;

The audio-video signal process module 22 comprising a digital signal processor(DSP) 221, which connects with the optic reading unit 21, a A/V amplifier module 23, a touch init 23, and a display unit 23, and receives the control signal from the touch unit 24 and the inputting data from the optic reading unit 21, then outputs a processed audio-video signal to the A/V amplifier module 23 according to the data, and then the A/V amplifier module outputs an amplified signal; meanwhile the user can read the process status according to the display unit 25;
the A/V amplifier module 23, which receives the audio-video signal from the audio-video signal process module 22, and outputs an amplified signal;
the touch unit 24, which inputs a control signal to the audio-video signal process module 22 in response to the user's operating command for driving the apparatus; and
the display unit 23, which can display the status according to the outputting data of the audio-video signal process module 22.

The user can input control command via the touch unit 24, and the audio-video signal process module 22 drives the optic reading unit 21 after receives the control signal, then the audio-video signal process module 22 outputs a processed audio-video signal to the A/V amplifier module 23 according to the data read by the optic reading unit 21, and the A/V amplifier module outputs an amplified signal for other external apparatuses, meanwhile the user can read the process status according to the display unit 25.

The audio-video process apparatus of DVD receiver of the invention is advantaged in:
1. The invention integrates the audio process module, video process module, and control module together by integrated circuit technology, then reduces manufacture cost.
2. The invention is highly reliable, long-using-life, small in circuitry board size, and saving setting space.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. An audio-video process apparatus of DVD receiver, which comprises:
An optic reading unit 21, an audio-video signal process module 22, a A/V amplifier module 23, a touch unit 24, and a display unit 25;
the optic reading unit 21, which can read the data from a storage medium, and then output the data to an audio-video signal process module 22;
the audio-video signal process module 22 comprising a digital signal processor (DSP) 221, which connects with the optic reading unit 21, a A/V amplifier module 23, a touch init 24, and a display unit 25, and receives the control signal from the touch unit 24 and the inputting 21 data from the optic reading unit, then outputs a processed audio-video signal to the A/V amplifier module 23 according to the data; and then the A/V amplifier module 21 outputs an amplified signal; meanwhile the user can read the process status according to the display unit 25;
the A/V amplifier module 23, which receives the audio-video signal from the audio-video signal process module 22 , and outputs an amplified signal;
the touch unit 24, which inputs a control signal to the audio-video signal process module 22 in response to the user's operating command for driving the apparatus; and
the display unit 25, which can display the status according to the outputting data of the audio-video signal process module22.
